# EUROPEAN PATENT SPECIFICATION

(11) **EP 4 163 079 B1**
(45) Date of publication and mention of the grant of the patent: **09.04.2025**
(21) Application number: 22200296.6
(22) Date of filing: 07.10.2022
(51) Int. Cl.: B29C 44/04, B29C 44/06, B29C 44/14, B29C 44/24, B29C 44/32, B29C 44/56, B29C 44/22, B29C 44/50, B29L 7/00

(54) **RESIN SHEET AND RESIN MOLDING**
HARZFOLIE UND HARZFORM
FEUILLE DE RÉSINE ET MOULAGE DE RÉSINE

(30) Priority: 11.10.2021 WO PCT/JP2021/037500; 22.08.2022 JP 2022131450
(43) Date of publication of application: 12.04.2023
(73) Proprietor: Maxell, Ltd., Otokuni-gun, Kyoto 618-8525 (JP)
(72) Inventor: YUSA, Atsushi, Kyoto, 618-8525 (JP); MIZUTANI, Kei, Kyoto, 618-8525 (JP); YAMAMOTO, Satoshi, Kyoto, 618-8525 (JP); GOTO, Toshiharu, Kyoto, 618-8525 (JP); TANIGUCHI, Satoki, Kyoto, 618-8525 (JP)
(74) Representative: Mewburn Ellis LLP

(56) References cited:
- JP-A- 2008 290 384
- JP-A- 2013 100 552
- US-A1- 2005 058 824
- US-A1- 2010 233 452
- US-A1- 2017 369 667

## Description

### TECHNICAL FIELD

The present disclosure relates to a resin sheet with a resin material constituted by engineering plastic and/or super engineering plastic, and a resin molding composed of such a resin sheet.

### BACKGROUND ART

Recently, the attention paid to foam resin has been growing as it can achieve a weight reduction of a resin molding, which can help reduce emissions of carbon dioxide. Methods of foam-molding a foam resin include physical foam molding and chemical foam molding. Chemical foam molding has a high environmental burden and has a large impact on the environment. In view of this, physical foam-molding methods using a physical blowing agent, such as nitrogen or carbon dioxide, are being researched. One physical foam-molding method that foams engineering plastic and/or super engineering plastic with high heat resistance involves shearing and kneading molten engineering and/or super engineering plastic resins and supercritical fluid under high pressure and dissolving them.

Japanese Patent No. 6139038 (Patent Document 1) discloses a method of manufacturing a foam molding using a physical blowing agent, such as nitrogen or carbon dioxide, under relatively low pressure without the need of supercritical fluid. This method enables forming fine foam cells in the resin molding with a relatively simple process using a physical blowing agent under low pressure without using special high-pressure equipment.

Methods of molding a foam resin include injection molding, which provides a resin molding with a complicated shape, and extrusion molding, which consecutively produces resin moldings with the same shape. In injection molding, when a foam resin is to be molded, the surface layer of the molten resin flows around within the mold while being cooled and solidified such that the surface layer of the resin molding forms a non-foamed skin layer. On the other hand, extrusion molding has less mold-size and load restrictions than injection molding and thus is suitable for manufacturing resin moldings with the same thickness; in addition, after a sheet-shaped resin molding has been obtained by extrusion molding, vacuum forming, for example, may be performed to provide a large resin molding with a relatively complicated shape. In extrusion molding, molten resin, while being discharged from the mold (or die), foams and expands and is then cooled and solidified; a skin layer cannot be formed readily at the surface of the resin molding.

Japanese Patent No. 3654697 (Patent Document 2) discloses a method of manufacturing a thermoplastic-resin foam sheet where a skin layer can be formed readily at the surface of the thermoplastic-resin foam sheet using extrusion molding. JP 2000-52370 A (Patent Document 3) discloses a method of manufacturing a multi-layer laminated molding having a foam layer and a skin layer produced by co-extrusion molding. The method of manufacturing a thermoplastic-resin foam sheet of Patent Document 2 and the method of manufacturing a multi-layer laminated molding of Patent Document 3 use commodity plastics with relatively low heat resistance and strength, such as polypropylene or polystyrene, as the main resin material, and does not use engineering plastic and/or super engineering plastic with good heat resistance and strength. Further, the objectives of the manufacturing methods of Patent Documents 2 and 3 is to enable easy or stable manufacturing of a foam molding, and not to improve heat resistance and strength.

Japanese Patent No. 3568655 (Patent Document 4) discloses a laminated extrusion foam sheet of polycarbonate-based resin with a plurality of extrusion foam sheets of polycarbonate-based resin bonded together. However, the laminated extrusion foam sheet of polycarbonate-based resin of Patent Document 4 is produced by cutting an extrusion foam sheet of polycarbonate-based resin and stacking them upon each other to achieve a relatively large thickness; the skin layer at the surface is not controlled.

JP H06-79816 A (Patent Document 5; "H06" stands for Heisei 6, i.e., the year 1994) discloses a multi-layer high-molecular-weight polycarbonate resin foam in which the weight-average molecular weight of the surface layer is 1.15 times or more as high as those of the other layers. The multi-layer high-molecular-weight polycarbonate resin foam of Patent Disclose 5 achieves a reduced decrease in the strength of the surface layer by virtue of a lower foam density in the surface layer of the polycarbonate resin foam with a higher molecular weight; the mechanical strength of the surface layer and the mechanical properties of the foam sheet are not precisely controlled.

JP 2020-138402 A (Patent Document 6) discloses a laminated foam sheet having a foam layer with a thickness of 0.1 to 3.0 mm and a non-foamed layer with a thickness of 0.05 to 0.5 mm. However, the resin material of the laminated foam sheet is a polyolefin-based resin, polystyrene-based resin, polyester-based resin and/or commodity plastic with relatively low heat resistance and mechanical properties, and is not engineering plastic and/or super engineering plastic with good heat resistance and mechanical properties.

JP 2014-172381 A (Patent Document 7) discloses a foam resin plate having a foam layer with an expansion ratio of 1.15 to 6 and a thickness of 1 to 30 mm, and a non-foamed layer with a thickness of 0.15 to 1 mm. This provides high hardness and good smoothness to the foam resin plate. However, the foam resin plate is not intended to achieve a reduction in the decrease of heat resistance or impact strength.

JP H08-072628 A (Patent Document 8; "H08" stands for Heisei 8, i.e., the year 1996) discloses a molding base material for automobile interior members made of a laminated foam resin sheet with good thermal dimensional stability and firmness due to its independent flat-shaped bubbles. The molding base material for automobile interior members of Patent Document 8 improves the thermal dimensional stability and firmness after thermal shaping by virtue of flat-shaped bubbles, and does not reduce decrease in the mechanical strength of the base material itself. Generally, as the density of a foam-molded articles decreases, its impact strength tends to decrease. Thus, a foam-molded article in the field of mobility, for example, is required to be light-weight and impact resistant. That is, when a foam molding is to be made, it is important to evaluate the impact strength of the base material itself, even with a resin with good impact resistance, such as polycarbonate. The main feature of Patent Document 8 is its machinability, and does not reduce decrease in impact strength by means of its sheet thickness, density, and cell diameter.

US2005/058824A1 discloses a thermoplastic resin foamed article, wherein the foamed article has two opposite surfaces, wherein the foamed article has at least a skin layer which defines one of the opposite surfaces and has a porosity of 0% or more but less than 1%, a lower-expansion layer which has a porosity of not less than 1% but less than 40% and is arranged so as to be adjacent to the skin layer, and a higher-expansion layer which has a porosity of not less than 40% but less than 100% and is arranged so as to be adjacent to the lower-expansion layer, wherein the skin layer, the lower-expansion layer and the higher-expansion layer are made of the same thermoplastic resin.

### PRIOR ART DOCUMENTS

### PATENT DOCUMENTS

[Patent Document 1] Japanese Patent No. 6139038
[Patent Document 2] Japanese Patent No. 3654697
[Patent Document 3] JP 2000-52370 A
[Patent Document 4] Japanese Patent No. 3568655
[Patent Document 5] JP H06-79816 A
[Patent Document 6] JP 2020-138402 A
[Patent Document 7] JP 2014-172381 A
[Patent Document 8] JP H08-072628 A

### SUMMARY OF THE INVENTION

### PROBLEMS TO BE SOLVED BY THE INVENTION

An object of the present disclosure is to provide a resin sheet and a resin molding that provide both light-weight properties and mechanical strength using a thermoplastic resin with high heat resistance.

### MEANS FOR SOLVING THE PROBLEMS

To solve the above-identified problems, the present invention provides a resin sheet according to claim 1. The resin sheet may optionally be as specified in any of claims 2 to 7. The present invention also provides a resin molding according to claim 8.

### EFFECTS OF THE INVENTION

The resin sheet and resin molding according to the present disclosure provide both light-weight properties and strength using a thermoplastic resin with high heat resistance.

### BRIEF DESCRIPTION OF THE DRAWINGS

[FIG. 1] FIG. 1 is a perspective view of a resin sheet according to an embodiment, showing its structure as viewed from outside.
[FIG. 2] FIG. 2 is an enlarged cross-sectional view of the resin sheet shown in FIG. 1.

### EMBODIMENTS FOR CARRYING OUT THE INVENTION

A resin sheet according to an embodiment of the present disclosure is formed from a thermoplastic resin. The resin sheet includes: a core layer, the core layer being a foam resin layer; and a skin layer located outward of the core layer as determined along a thickness direction, the core layer and the skin layer forming a continuity. The core layer includes a first region and a second region located between the first region and the skin layer. The second region has a lower average porosity than the first region, said average porosity being lower than 50 %, and the thermoplastic resin has a deflection temperature under load not lower than 90 °C. The resin sheet has a thickness of 1 to 40 mm. The skin layer has a thickness of 5 to 50 % of the thickness of the resin sheet. This resin sheet will improve strength more effectively. Details of how to calculate average porosity etc. will be provided further below.

Thus, with a thermoplastic resin having a deflection temperature under load not lower than 90 °C, the thickness of the resin sheet and the thickness of the skin layer as well as the average porosity of the core layer are appropriate, thereby providing both light-weight properties and strength using a thermoplastic resin with high heat resistance.

In the resin sheet, the average porosity decreases going from a center of the core layer as determined along the thickness direction toward a surface of the resin sheet. In the resin sheet, the porosity gradually decreases going from a center of the core layer as determined along the thickness direction toward a surface of the resin sheet. This will prevent stress concentration at the interference between the core and skin layers upon application of an external force to the resin sheet. As a result, the impact strength of the resin sheet will be improved.

The first region may have an average porosity of 50 % to 95 %. The second region may have a lower average porosity than the first region. It is even better if the porosity gradually decreases going from the first region toward the skin layer. This will improve strength more effectively.

The first region may have an average porosity of 65 % to 90 %. It is even better if the porosity decreases going from the first region toward the skin layer. This will improve strength even more effectively.

The resin sheet may have a bend elastic constant not lower than 1.5 GPa and a density not higher than 1.0 g/cm³. The skin layer may have a bend elastic constant not lower than 1.5 times a bend elastic constant of the core layer. This will provide both light-weight properties and strength more effectively.

The resin sheet may have a deflection temperature under load not lower than 150 °C, a bend elastic constant not lower than 3 GPa, and a density not higher than 1.3 g/cm³. This will provide both light-weight properties and strength even more effectively.

The skin layer may be formed from a reinforced resin containing inorganic filler. This will reduce weight and improve strength while efficiently improving strength.

The thermoplastic resin may contain at least one selected from the group consisting of polycarbonate, modified polyphenylene ether, syndiotactic polystyrene, polyphenylene sulfide, polysulfone, polyether sulfone, polyarylate, polyamidimide, thermoplastic polyimide, polyether imide, and liquid-crystal polymer.

A resin molding according to an embodiment of the present disclosure may be a resin molding produced by thermally shaping one of the above-described resin sheets.

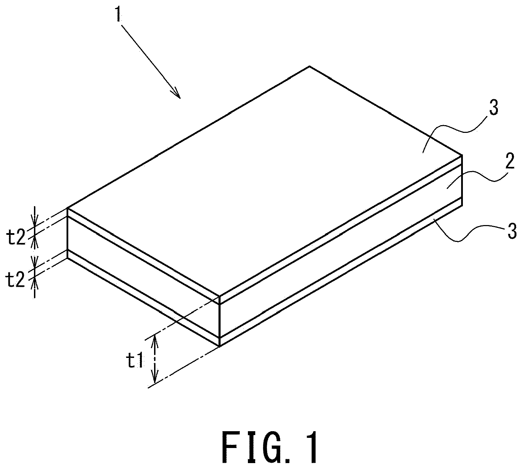

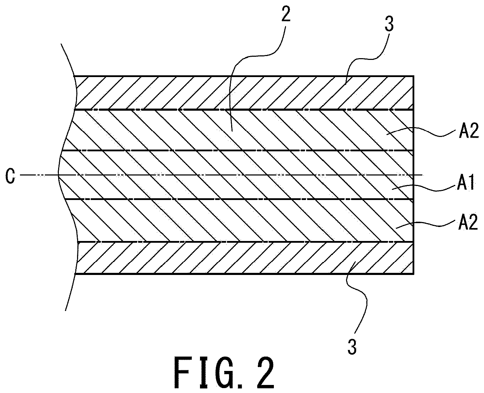

Now, embodiments of the resin sheet of the present disclosure, denoted by the numeral 1, will be specifically described with reference to FIGS. 1 and 2. The same and corresponding elements in the drawings are labeled with the same reference characters, and their description will not be repeated. For ease of explanation, the drawings to which reference will be made below show elements in a simplified or schematic manner, and/or do not show some elements.

As shown in FIGS. 1 and 2, the resin sheet 1 includes a core layer 2 and skin layers 3 on both sides of the core layer 2, located outward thereof as determined along the thickness direction. That is, the skin layers 3 are located outward of the core layer 2 as determined along the thickness direction, the core layer and the skin layers forming a continuity. As used herein, "outward of the core layer 2 as determined along the thickness direction, the core layer and the skin layers forming a continuity" means that the core layer 2 and skin layers 3 are integrally formed by co-extrusion such that there are no clear interfaces, and not that a core layer 2 and skin layers 3 were separately prepared and then sticked together such that there were clear interfaces.

The core layer 2 is constituted by a foam resin layer. The resin material of the core layer 2 is thermoplastic resin. The thermoplastic resin used in the present disclosure has a deflection temperature under load not lower than 90 °C. As used herein, deflection temperature under load is determined in accordance with ISO 075-2B with a load of 1.81 MPa.

The thermoplastic resin used for the core layer 2 of the present disclosure may include engineering plastic and/or super engineering plastic. Engineering plastic is a thermoplastic resin having a deflection temperature under load not lower than 100 °C. Examples of engineering plastics that can be used for the core layer 2 of the present disclosure include: polycarbonate (PC), modified polyphenylene ether (m-PPE), and syndiotactic polystyrene (SPS). Super engineering plastic is a thermoplastic resin having a deflection temperature under load not lower than 150 °C. Examples of super engineering plastics that can be used for the core layer 2 of the present disclosure include polyphenylene sulfide (PPS), polysulfone (PSF), polyether sulfone (PES), polyarylate (PAR), polyamidimide (PAI), thermoplastic polyimide (PI), polyether imide (PEI), and liquid-crystal polymer (LCP). The thermoplastic resin used for the core layer 2 of the present disclosure may contain at least one selected from the group consisting of these engineering plastics and super engineering plastics.

If the expansion ratio (i.e., rate of reduction in specific gravity) of the core layer 2 is relatively high, the weight can be reduced but the strength will decrease; if the expansion ratio (i.e., rate of reduction in specific gravity) is relatively low, the strength can be improved but the weight cannot be reduced. In view of this, to reduce weight and improve strength at the same time, the expansion ratio (i.e., rate of reduction in specific gravity) of the core layer 2 is preferably not lower than 1.2 (17 %); the expansion ratio is preferably not higher than 5 (80 %), and more preferably, to reduce a decrease in machinability caused by, for example, rupture during thermal shaping such as vacuum forming, not higher than 3 (67 %).

A skin layer 3 is overlaid on at least one of the major surfaces of the core layer 2. That is, a skin layer (or skin layers) 3 may be overlaid on one or both of the major surfaces of the core layer 2. To improve strength, it is preferable that skin layers 3 are overlaid on both major surfaces of the core layer 2. The resin material of the skin layers 3 is a thermoplastic resin having a deflection temperature under load not lower than 90 °C. The thermoplastic resin used for the skin layers 3 may contain at least one selected from the group consisting of the above-listed engineering plastics and super engineering plastics used for the core layer 2. The skin layers 3 may be formed from the same one thermoplastic resin, or the same combination of thermoplastic resin materials, as for the core layer 2, or may be formed from one thermoplastic resin, or combination of thermoplastic resin materials, different from that of the core layer 2.

The resin sheet 1 has a gradient structure with an average porosity (%) that decreases going from its center C as measured along the thickness direction toward the surfaces of the resin sheet 1. In other words, the bubble diameter of bubbles formed in the resin sheet 1 decreases going from the center along the thickness direction toward the surfaces. Average porosity can be calculated from the proportion in cross-sectional area of foam cells per unit cross-sectional area in the resin sheet 1. Details of how to calculate average porosity will be provided further below.

The core layer 2 is formed from foam resin. The core layer 2 is a region having an average porosity of 5 % to 95 %. As shown in FIG. 2, the core layer 2, where the total thickness of the core layer 2 is represented as 100 %, includes a region A1 covering a range from 0 % to less than 40 % away from the center C of the core layer 2 as determined along the thickness direction toward a skin layer 3, and regions A2, each located between the region A1 and the associated skin layer 3. In FIG. 2, a one-point-chain line indicates a border between layers or regions, and the two-point-chain line is the centerline indicating the center C as determined along the thickness direction. The region A1 has an average porosity of 50 % to 95 %. As the region A1 covers a range from the center C to 40 % as determined along the thickness direction relative to the total thickness of the resin sheet 1, large bubbles are prevented from forming near the surfaces of the resin sheet 1 during thermal shaping such as vacuum forming, which will reduce deterioration of machinability caused by swelling, rupture or the like at the surfaces of the resin sheet 1. Each region A2 has a lower average porosity than the region A1, where average porosity decreases going from the region A1 toward the associated skin layer 3. As the average porosity of the region A2 is reduced, i.e., the thickness of the walls between bubbles (hereinafter also referred to as bubble walls) is increased, a foaming-induced decrease in impact strength will be reduced. Further, as the average porosity of the region A1 is higher than the average porosity of the region A2, it is ensured that the weight will be reduced. If the average porosity of the region A1 is not higher than 50 %, it is possible that the expansion ratio of the core layer 2 is not higher than 1.2. In view of this, to form a core layer 2 with an expansion ratio of 1.3 to 3 which is suitable for reducing weight, the average porosity is preferably not lower than 50 %, and more preferably, since a sheet with a large total thickness is suitable for applications such as impact-resistant members, the average porosity of the region A1 is not lower than 65 %. If the average porosity of the region A1 is not lower than 96 %, the effect of reducing weight is expected to be sufficiently produced; however, walls between bubbles can be extremely thin, and thus the sheet may break upon application of an impact. In view of this, the average porosity of the region A1 is preferably not higher than 95 %, and more preferably, to prevent fracture of walls between bubbles due to the sheet being drawn out during thermal shaping such as vacuum forming, not higher than 90 %. By way of example, if the average porosity of the region A1 is 80 %, the average porosity in each region A2 decreases from a level below 80 %, which is lower than that of the region A1, going toward the associated skin layer 3. That is, the region A1, covering a range from 0 % to less than 40 % as determined along the thickness direction away from the center C along the thickness direction toward the skin layer 3, is to have a predetermined average porosity within a range of 50 to 95 %, preferably 65 % to 90 %; the region A2 between the region A1 and the skin layer 3 may have an average porosity lower that the above-mentioned predetermined average porosity, and may have an average porosity decreasing toward the skin layer 3. However, if the average porosity of the region A2 is not lower than 50 %, the impact resistance of the resin sheet, decreases. In view of this, the average porosity of the region A2 is preferably lower than 50 %. The skin layer 3 is formed from non-foamed resin. That is, the skin layer 3 is a region having an average porosity of 0 % or high but lower than 5 % in arbitrarily chosen three sections located in one and the same thickness range.

More specifically, average porosity can be calculated as follows: First, a portion of the resin sheet 1 is cut out to produce a square piece of sheet of 20 by 20 mm in plan view. A high-output X-ray micro-CT system (from Shimadzu Corporation, type number "inspeXio SMX-225CTS") is used to CT-scan the piece of sheet to obtain a CT image of a cross section in the thickness direction, cut along a line passing through the center point of the piece of sheet and the midpoint of any side thereof as viewed in plan view. Detailed measurement conditions are as follows: application at 160 kV; pixel size of 0.105 mm/voxel; pixel number of 512 by 512 by 512; view number of 1200; and field of view of 53.5 mm in X/Y directions and 48.9 mm in Z direction. The cross-sectional view of the resin sheet 1 is equally divided into 16 sub-sections that are arranged in the width direction; from among the large number of bubbles present in the cross section of the resin sheet 1, 15 are selected that are located on the imaginary borderlines of the sub-sections and close to the surface of the resin sheet 1; among these bubbles, the one closest to a surface of the resin sheet 1 is identified. Another imaginary line is drawn that runs through the uppermost point of this closest bubble and perpendicular to the thickness direction. The portion located inward of the imaginary line as determined along the thickness direction is treated as a core layer 2, and the portion located outward along the thickness direction is treated as a skin layer 3 and the thickness t2 of the skin layer 3 is measured. Subsequently, a CT image of a cross section of the core layer 2 is divided equally into 20 parts that are arranged in the thickness direction, and each of these parts is further cut to define square sub-sections (therefore, the length of one side of one sub-section depends on the thickness of the resin sheet 1), and 5 columns of such sub-sections are extracted, one column for 20 sub-sections. Thus, each column passes through regions A1 and A2, along the thickness direction of the core layer 2. Next, image processing software "Image J (from the U.S. National Institute of Health)" was used to produce binaries for bubbles and bubble walls. A threshold for this binarization can be decided upon from a concentration histogram obtained by Otsu's method. The white portions in the resulting binary image are treated as bubble walls and the black portions as bubbles; independent bubbles in each sub-section of each column are identified, and the total cross-sectional area thereof is calculated. The calculated total cross-sectional area of the independent bubbles in each sub-section is divided by the cross-sectional area of this particular sub-section to calculate the porosity of that sub-section. Lastly, the average of the porosities of all the sub-sections in the region A1 and the average of the porosities of all the sub-sections in the region A2 are calculated. The average of the porosities of the sub-sections in the regions A1 and A2 is referred to as average porosity. The core layer 2 may be divided equally into 21 or more parts in order to calculate a more precise average porosity along the thickness direction. Further, the sub-sections containing the border between the regions A1 and A2 are excluded from the calculation of average porosity. When seen in the cross-sectional image of the core layer 2, the 5 extracted columns are at the center along the width direction, at one end along the width direction, at the other end along the width direction, at the middle between the center along the width direction and the one end along the width direction, and the at the middle between the center along the width direction and the other end along the width direction, respectively.

As shown in FIG. 1, the resin sheet 1 has a thickness t1 of 1 to 40 mm. The skin layers 3 has a thickness t2 of 5 to 50 % of the thickness t1 of the resin sheet 1. As discussed above, a skin layer (or skin layers) 3 may be overlaid on one or both of the major surfaces of the core layer 2. If skin layers 3 are overlaid on both major surfaces of the core layer 2, the thickness t2 of the skin layers 3 is the sum of the thickness of one skin layer 3 and the thickness of the other skin layer 3.

If the thickness t1 of the resin sheet 1 is 1 to 5 mm, i.e., the thickness t1 is small, the effect of improving strength is large even if the thickness t2 of the skin layer(s) 3 is relatively small; if the thickness t2 of the skin layer(s) 3 is relatively large, the effect of reducing weight tends to decrease. In view of this, if the resin sheet 1 has a thickness t1 not smaller than 1 mm and smaller than 5 mm, the thickness t2 of the skin layer(s) 3 is to be not smaller than 5 % of the thickness t1 of the resin sheet 1 and, preferably, to provide for high rigidity, impact strength, and rupture/peel prevention during thermal shaping such as vacuum forming, not smaller than 10 %; the thickness t2 is to be not larger than 50 % and preferably, to provide for the effect of reducing weight, not larger than 40 %. If the thickness is smaller than 5 mm, any shape can be achieved by a post-treatment such as vacuum forming, which means applicability in light-weight structural members or panel members. Further, in implementations where the thickness t1 of the resin sheet 1 is not smaller than 5 mm, i.e., the thickness t1 is large, it is less easy to improve strength if the thickness of the skin layer(s) 3 is relatively small than in implementations with a small thickness t1. In view of this, if the resin sheet 1 has a thickness t1 of 5 to 40 mm, the thickness t2 of the skin layer(s) must be relatively large: the thickness t2 is to be not smaller than 10 %; to reduce weight, the thickness t2 is to be not larger than 50 %, and more preferably, to further reduce weight, not larger than 40 %. While such a thick sheet has high thermal insulation and thus is difficult to subject to thermal shaping by post-treatment such as vacuum forming, such a sheet has a very high sheet rigidity and thus is applicable in construction material and plywood.

Thus, in the resin sheet 1, the thickness of the resin sheet 1 and the thickness of the skin layer(s) 3 are appropriate, and the average porosity of the core layer 2 is appropriate, thereby providing both light-weight properties and strength using a thermoplastic resin with high heat resistance.

If the resin sheet 1 is made of engineering plastic, the resin sheet 1 has a bend elastic constant not lower than 1.5 GPa and a density not higher than 1.0 g/cm³. In the present disclosure, bend elastic constant is defined as a value obtained by an evaluation from three-point bending testing (ISO 178). If the resin sheet 1 is made of engineering plastic, reducing weight by virtue of a foam-molded core layer 2 and improving strength by virtue of non-foamed skin layers 3 will reduce density (i.e., reduce weight) and improve strength at the same time.

If the resin sheet 1 is made of super engineering plastic, the resin sheet 1 has a bend elastic constant not lower than 3 GPa and a density not higher than 1.3 g/cm³. Super engineering plastic is generally harder than other thermoplastic resins (e.g., commodity plastics), and thus is difficult to draw out. Thus, if super engineering plastic is foam-molded at a higher expansion ratio, bubbles may rupture, significantly decreasing mechanical strength. In view of this, if the resin sheet 1 is made of super engineering plastic, the expansion ratio of the core layer 2 is preferably 1.2 to 2.

Each skin layer 3 may be formed from a thermoplastic resin with a bend elastic constant not lower than 1.5 times that of the thermoplastic resin constituting the resin material of the core layer 2. The skin layer 3 is suitably made of a thermoplastic resin that is highly adhesive to the core layer 2. Further, to reinforce the skin layer 3, the skin layer 3 may be formed from a reinforced resin containing inorganic filler. These implementations of the skin layer 3 will reduce weight and improve strength, with efficient improvement of strength. Examples of inorganic fillers include glass fiber, carbon fiber, aramid fiber, talc, and mica. According to the present disclosure, the mechanical properties of the thermoplastic resin of the skin layers 3 may be evaluated by mechanically separating the core layer 2 and skin layers 3 and then melting them again to produce a test specimen. The mechanical properties of the core layer 2 may be measured after mechanically peeling the skin layers 3.

The resin sheet 1 may be made by separately producing a core layer 2 and skin layers 3 and thermally welding these layers. That is, the resin sheet 1 may be made by separately producing a core layer 2 and skin layers 3 and then sticking them together with their major surfaces facing each other. Alternatively, the core and skin layers 2 and 3 may be integrally formed by co-extrusion. In such implementations, foaming may be done by the above-mentioned method of shearing and kneading molten resin and high-pressure supercritical fluid and dissolving them, or foaming may be done using a physical blowing agent under relatively low pressure, such inert gas, e.g., nitrogen, carbon dioxide, air or argon. To facilitate control of bubbles formed in the core layer 2 and facilitate control of the thickness t1 of the resin sheet 1 and the thickness t2 of the skin layers 3, it is preferable to produce the resin sheet 1 by welding the core layer 2 and skin layers 3. On the other hand, if the resin sheet 1 is molded by co-extrusion, as discussed above, there will be no clear interfaces between the core layer 2 and skin layers 3, and there will be regions A2 each having decreasing average porosity between the region A1 and the associated skin layer 3. As a result, the resin sheet 1 will have increased impact strength. That is, in the case of co-extrusion, it is desirable to integrate the core and skin layers 2 and 3 inside a die or the like before the core layer 2 is foamed or while the core layer is being foamed.

The resin sheet 1 thus produced can be shaped by heat forming to any desired shape. As used herein, heat forming means forming a heated and softened plastic sheet by pressing it to a mold with a desired shape. Among various heat forming processes, vacuum forming is preferable where the air in the gap between the mold and resin sheet 1 is removed and atmospheric pressure is used to cause the resin sheet 1 to tightly adhere to the mold to perform forming. Other examples include pressure forming, where compressed air at a pressure higher than the atmospheric pressure is used to perform forming, and vacuum-pressure forming, where vacuum forming and pressure forming are used in combination. Yet other examples include double-side vacuum forming, where the resin sheet 1 is positioned in a space defined by a recessed mold and a protruding mold that is larger than the thickness of the resin sheet 1 and, then, the resin sheet 1 is vacuum-drawn in both directions in the mold. Heat forming is not limited to any particular method, and examples of methods include plug forming, match-mold forming and plug-assist forming. Further, the shape after forming is not limited to any particular one. Heat forming allows the resin sheet to be used in the following applications: For example, a resin molding obtained by thermally shaping such a resin sheet 1 may be a wide product or part required to have relatively high strength, such as a signboard or a mobility material, e.g., automobile cladding, or a product or part required to have heat resistance, such as a battery or a tray for hot members used in a manufacturing process that includes a heating step, or a product or part required to be light-weight. Since the resin sheet 1 includes thermoplastic resin, it is a suitable material for forming a resin molding for such a product or part as mentioned above.

A product, part, etc. fabricated from the resin sheet 1 achieves a reduction of the amount of resin used. As a result, the resin sheet 1 according to the embodiments can contribute to improving the efficiency with which natural resources are used, to alleviating transportation-related issues, to reducing in the amount of energy used, and to reducing CO2 emissions. Offering the resin sheet 1 to society will contribute to achieving some of the 17 Sustainable Development Goals (SDGs) set by the United Nations: Goal 7 (affordable and clean energy); Goal 9 (industry, innovation and infrastructure); and Goal 11 (sustainable cities and communities). Further, since the resin sheet 1 according to the embodiments can be melted and reused, it can contribute to achieving Goal 12 (responsible consumption and production).

### (Examples)

As shown in Table 1 provided below, various test specimens of resin sheets were produced, and the specific bend elastic constant of each test specimen was calculated to determine the light-weight properties and strength of each test specimen. In Table 1, test specimens 1 to 4, 11, 12, 17, 21 and 27 are comparative examples, while the other test specimens are inventive examples. For the test specimens containing both the core and skin layers (except for test specimen 27), co-extrusion was used to produce a resin sheet, where the skin layer(s) was/were made of a resin material mainly composed of the same raw material as that for the core layer. The core layer was produced by foam extrusion, i.e., by shearing/kneading with a screw cylinder under high pressure using a known physical blowing agent. The method of producing test specimen 27 will be described further below. The polycarbonate resin used here was Panlite L-1250Y from Teijin Limited, with a density of 1.2 g/cm³, a deflection temperature under load of 143 °C, and a bend elastic constant of 2.2 to 2.3 GPa. The specific bend elastic constant (i.e., bend elastic constant divided by density) of the resin sheet under these preconditions was 1.83 GPa. It can be said that the higher the specific bend elastic constant, the lighter and the more rigid. "Proportion of skin in thickness (%)" in Table 1 means the ratio of the thickness t2 of the skin layer(s) to the thickness t1 of the resin sheet.

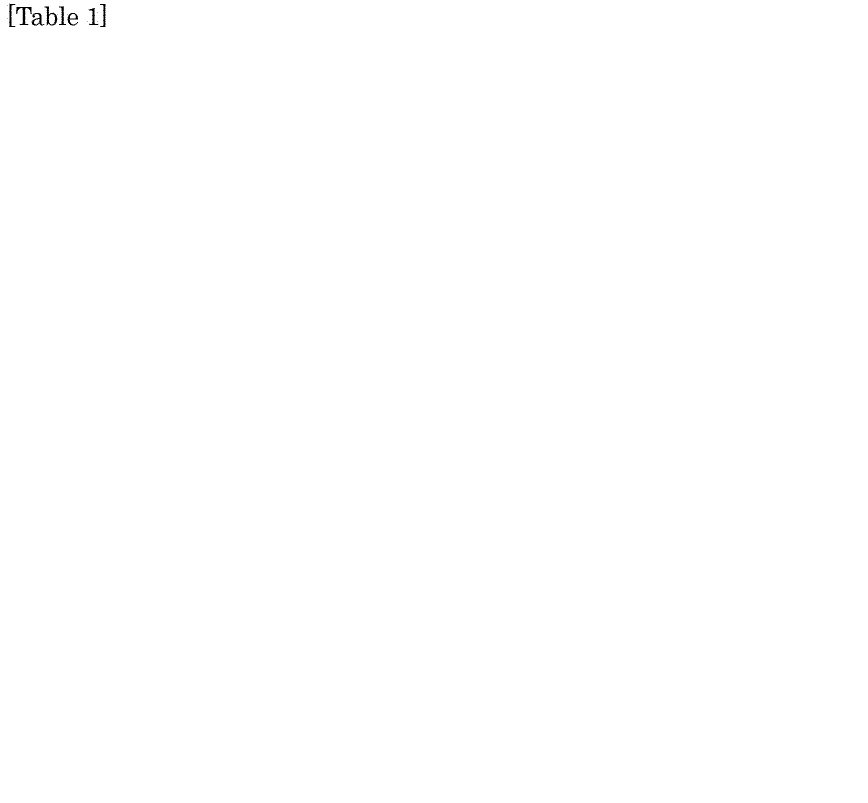

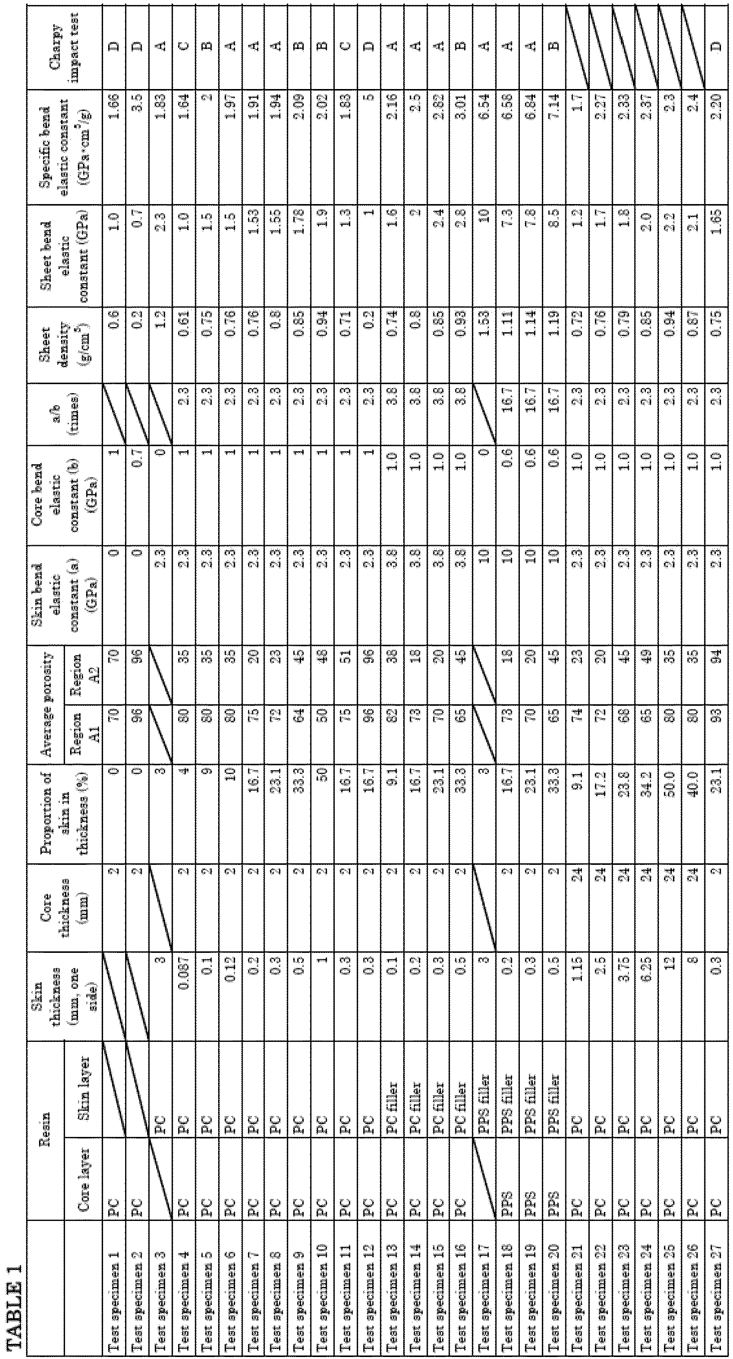

The various test specimens produced were cut in the thickness direction to produce test samples, and the average porosity of the cut surface of each test sample was calculated by the above-described method to determine the skin and core layers. The average porosities of the regions A1 and A2 of the core layer are shown Table 1.

For each test specimen produced, three-point bending testing was conducted in accordance with ISO 178 to calculate the bend elastic constant and specific bend elastic constant, which are shown in table 1.

For each test sample, flatwise vertical testing was conducted by Charpy impact testing (in accordance with ISO 179-1) without a notch; a 4J pendulum was used for evaluation to see whether the sample broke. For each test specimen, 10 test samples were evaluated: in Table 1, a specimen for which the probability of a complete break, hinge break or partial break was 0 % is labeled "A", a specimen with 1 % up to 30 % labeled "B", a specimen with 31 % up to 50 % labeled "C", and a specimen with 51 % to 100 % labeled "D".

First, test specimen 1 was a resin sheet including only a core layer constituted by a foam resin layer. That is, test specimen 1 had no skin layer. Test specimen 1 was produced by melting polycarbonate resin in a screw cylinder at 270 °C to produce molten resin, mixing this molten resin with 0.3 % nitrogen, which served as a physical blowing agent, using known high-pressure equipment, and extrusion-molding at a haul-off speed of 0.7 m/min into a sheet, where the die outlet temperature was 215 °C and the aperture was such that the resulting thickness was 2 mm. The expansion ratio for test specimen 1 was 2 (i.e., rate of reduction in specific gravity of 50 %). The density of test specimen 1 was 0.6 g/cm³, and the bend elastic constant was 1 GPa. The specific bend elastic constant calculated from these physical properties was 1.66 GPa·g/cm³.

Similarly, test specimen 2 was also a resin sheet including only a core layer. That is, test specimen 2 had no skin layer. Test specimen 2 was produced by melting polycarbonate resin in a screw cylinder at 270 °C to produce molten resin, and mixing this molten resin with isopentane, which served as a physical blowing agent, using known high-pressure equipment to produce a 0.53 mol/kg resin, and extrusion-molding at a haul-off speed of 0.7 m/min into a sheet, where the die outlet temperature was 215 °C and the aperture was such that the resulting thickness was 2 mm. The expansion ratio of test specimen 2 was 6 (i.e., rate of reduction in specific gravity of 84 %). The density of test specimen 2 was 0.2 g/cm³, and the bend elastic constant was 0.7 GPa. The specific bend elastic constant calculated from these physical properties was 3.5 GPa·g/cm³.

Next, test specimens 4 to 12 were produced. Each of test specimens 4 to 12 was a resin sheet including a core layer made of polycarbonate resin and skin layers made of, again, polycarbonate resin. In each of these resin sheets, skin layers were formed by co-extrusion on both sides of the core layer to be located outward thereof as determined along the thickness direction. A main extruder and an auxiliary extruder were used, where the foam core layer was molded by the main extruder in the manner described above. The skin-layer resin was made by the auxiliary extruder, where the screw cylinder of the auxiliary extruder was loaded with polycarbonate resin, which was heated and kneaded at 270 °C, and extruded onto both sides of the core layer at a die outlet temperature of 215 °C. Here, as was the case with the main extruder, the outlet aperture was adjusted appropriately to achieve a skin-layer thickness shown in Table 1. Further, the average porosity was adjusted by increasing/reducing the temperature in the single cylinder from the screw cylinder to the die. Specifically, the temperature in the single cylinder was adjusted upward in order to increase the average porosity of the region A1 of the core layer, and the temperature in the single cylinder was adjusted downward in order to reduce the average porosity of the region A1.

Test specimen 2 had a reduced sheet density compared with test specimen 1. Thus, test specimen 2 had a significantly improved specific bend elastic constant over the specific bend elastic constant of test specimen 1. Thus, test specimen 2 achieved a significant weight reduction compared with test specimen 1; however, test specimen 2 had a "D" for Charpy impact testing, as was the case with test specimen 1, and had a decreased bend elastic constant compared with test specimen 1. That is, it was found that, in the case of a resin sheet made of polycarbonate resin, reducing the weight simply by increasing expansion ratio deteriorates the impact resistance of the resin sheet itself.

Test specimen 4 had a proportion of skin layers in thickness of 4 %, i.e., lower than 5 %. Test specimen 4 did not exhibit an improved bend elastic constant compared with test specimen 1, and had a "C" for Charpy impact testing.

Test specimens 5 to 10 each had a proportion of skin layers in thickness not lower than 5 %. Thus, test specimens 5 to 10 had improved bend elastic constants compared with the bend elastic constant of test specimen 1. Test specimens 5 to 10, having proportions of skin layers in thickness (%) not lower than 5 %, had improved specific bend elastic constants over the specific bend elastic constant of test specimen 1. The result of the Charpy impact test on test specimen 6 shows that, if the proportion of skin layers in thickness is not lower than 10 %, the probability of a test sample breaking during Charpy impact testing is 0 %, i.e., an evaluation will result in an "A", meaning further improved impact resistance. Similarly, test specimens 7 and 8 had good impact resistance. The results of the Charpy impact tests on test specimens 9 and 10 show that an evaluation of a specimen in which the average porosity of the region A1 of the core layer is not higher than 64 % will result in a "B", meaning somewhat good impact resistance. A comparison between test specimens 9 and 10 shows that the specific bend elastic constants of test specimen 9 and 10 were substantially equal, which means that the effects of reducing weight and improving strength will be in saturation when the proportion of skin layers in thickness reaches 50 %.

Looking at test specimens 4 to 10, the highest specific bend elastic constant was 2.09 GPa for test specimen 9. Test specimen 7, even with a density of 0.85 g/cm³, had an increased specific bend elastic constant compared with test specimen 1. On the other hand, test specimen 11 had a decreased impact resistance, as the average porosity of the regions A2 of the core layer was higher than 50 %, i.e., the proportion of resin decreased near the skin layers. Further, the test result of test specimen 12 shows that, if both regions A1 and A2 of the core layer have high average porosities, the interfaces between the skin and core layers will not produce the effect of mitigating impact-induced stress, which means a significantly decreased impact resistance. Thus, the specific bend elastic constants and the results of Charpy impact testing for test specimens 4 to 11 show that both a weight reduction and an improvement in strength can be achieved if the proportion of skin layers in thickness is 5 to 50 % and the average porosity of the regions A2 is lower than 50 %. It was also found that an even better impact resistance can be obtained if the average porosity of the region A1 is not lower than 65 %.

Further, for each of test specimens 5 to 10, the bend elastic constant of the resin sheet was not lower than 1.5 GPa, the density of the resin sheet was not higher than 1.0 g/cm³, and the bend elastic constant of the skin layers was not lower than 1.5 times the bend elastic constant of the core layer. Thus, test specimens 5 to 10 had yet further improved specific bend elastic constants over test specimen 3, which was a solid sheet composed of a skin layer without a core layer.

Next, test specimens 13 and 16 were produced. In the production of test specimens 13 to 16, the extruder conditions were the same as for test specimens 4 to 12, where the temperature in the single cylinder of the auxiliary extruder was adjusted as appropriate to adjust the average porosity to respective levels. As shown in Table 1, for each of test specimens 13 to 16, the values of the thickness of the skin layer overlaid on each side of the core layer, located outward thereof in the thickness direction, were 0.1 mm (test specimen 13), 0.2 mm (test specimen 14), 0.3 mm (test specimen 15), and 0.5 mm (test specimen 16). That is, the values of the sum of the thicknesses of the skin layers on both sides of the core layer located outward thereof along the thickness direction (i.e., thickness t2) were 0.2 mm (test specimen 13), 0.4 mm (test specimen 14), 0.6 mm (test specimen 15), and 1.0 mm (test specimen 16). Unlike in test specimens 4 to 12, the skin layers of test specimens 13 to 16 were produced using a polycarbonate resin with glass filler (Panlite G-3330M from Teijin Limited, with a density of 1.44 g/cm³, a deflection temperature under load of 138 °C and a bend elastic constant of 3.8 GPa).

The test results of test specimens 13 to 16 show that forming, on a core layer, skin layers with a high bend elastic constant such that the proportion of skin layers in thickness was not lower than 5 % efficiently improved rigidity and increased the specific bend elastic constant over that of test specimen 3, which was a solid sheet. The test result of test specimen 16 shows that, as the proportion of skin layers in thickness was 33.3 %, the density was not higher than 1 g/cm³, and the bend elastic constant and specific bend elastic constant were improved over test specimen 3. It is to be noted that the specific bend elastic constant of test specimen 16 was improved by more than 60 % over the specific bend elastic constant of test specimen 3. Thus, it was found that test specimens 13 and 16 improved both light-weight properties and strength.

Next, test specimens 18 to 20 were produced. For each of test specimens 18 to 20, PPS resin (Z230 from DIC Corporation, with a density of 1.53 g/cm³, a deflection temperature under load of 260 °C (under a load of 1.8 MPa), and a bend elastic constant of 10 GPa) was used to produce, by co-extrusion, a resin sheet with skin layers on both sides of the core layer located outward thereof as determined along the thickness direction. The thickness of the core layer was 2.0 mm, and the expansion ratio of the core layer was 1.5 (i.e., rate of reduction in specific gravity of 33 %). Although not shown in Table 1, to state physical properties of the core layer alone of each of test specimens 18 to 20, the density was 1.0 g/cm³ and the bend elastic constant was 0.6 GPa. The specific bend elastic constant of the core layer alone calculated therefrom was 6 GPa, which was lower than 6.54 GPa for test specimen 17, which was a solid sheet. The values of the thickness of the skin layer on each side of the core layer located outward thereof as determined along the thickness direction were 0.2 mm (test specimen 18), 0.3 mm (test specimen 19), and 0.5 mm (test specimen 20). That is, the values of the sum of the thicknesses of the skin layers on both sides of the core layer located outward thereof as determined along the thickness direction (i.e., thickness t2) were 0.4 mm (test specimen 18), 0.6 mm (test specimen 19), and 1.0 mm (test specimen 20). The test results of test specimens 18 to 20 show that these specimens had reduced weight and improved specific bending rigidity over test specimen 17.

Next, test specimens 21 to 26 were produced. The core layer of each of test specimens 21 to 26 was a polycarbonate foam-resin layer with a thickness of 24 mm. Even with such relatively thick core layers, forming skin layers so that the proportion of skin layers in thickness was not lower than 5 % efficiently improved the rigidity and increased the specific bend elastic constant over test specimen 3. Thus, the resin sheet of the present invention achieved an improved specific bend elastic constant over test specimen 1 by providing, in a thickness range of 1 to 40 mm, skin layers located outward of the core layer as determined along the thickness direction such that the ratio of the thickness of the skin layers to the thickness of the resin sheet was 5 to 50 %. Further, if the proportion of skin layers in thickness exceeded 10 %, a resin sheet was provided that had significantly improved specific bend elastic constant, reduced weight and high rigidity.

Further, strength testing was conducted on test specimens 1, 8 and 27. More specifically, strength testing was conducted by allowing an iron ball of 1 kg fall freely from a height of 1 m above the surface of each test specimen, and the cracks produced in the specimens, if any, were observed. Test specimen 27 had generally the same layer construction as test specimen 8 except that the core and skin layers were bonded by an organic solvent of methyl ethyl ketone to produce the specimen. That is, the cross section of test specimen 27 had clear interfaces between the skin and core layers. On the other hand, test specimen 8 was produced by co-extrusion, as discussed above, and the core and skin layers were formed by the above-discussed average porosity decreasing from the center of the resin sheet along the thickness direction toward the surfaces of the resin sheet. An observation of the cross section of test specimen 8 in the thickness direction showed that, where the total thickness of the core layer was represented as 100 %, a range from 0 % to less than 20 % (region A1) away from the center of the core layer along the thickness direction toward both skin layers had an average porosity of 72 %, and the skin layers had an average porosity of 2 %. Further, each region A2, located between the region A1 of the core layer and the associated skin layer, had an average porosity decreasing from 72 % to 23 % from the region A1 toward the skin layer, and had the above-mentioned gradient structure. As discussed above, test specimen 1 was only composed of a core layer.

When the iron ball was allowed to fall freely from a height of 1 m onto each of test specimens 1, 8 and 27, test specimen 1 was completely broken, whereas test specimens 8 and 27 were not broken, with no cracks.

Next, when the iron ball was allowed to fall freely from a height of 1.25 m onto test specimens 8 and 27, test specimen 27 was not completely broken, even though some cracks were produced. Test specimen 8 was not broken, with no cracks. This is presumably because test specimen 8 had core and skin layers that were integrally formed and had an average porosity that decreased going from the center along the thickness direction toward the surfaces, preventing concentration of stress derived from external forces.

### REFERENCE SIGNS LIST

1: resin sheet
2: core layer
3: skin layers
t1: thickness
t2: thickness
A1: region
A2: region
C: center as determined along thickness direction

## Claims

1. A resin sheet (1) formed from a thermoplastic resin, comprising:
a core layer (2), the core layer (2) being a foam resin layer; and
a skin layer (3) located outward of the core layer (2) as determined along a thickness direction, the core layer (2) and the skin layer (3) forming a continuity,
wherein the core layer (2) includes a first region (A1) and a second region (A2) located between the first region (A1) and the skin layer (3),
the second region (A2) has a lower average porosity than the first region (A1), said average porosity being lower than 50 %,
the average porosity of the second region (A2) decreases going from a center of the core layer (2) as determined along the thickness direction toward a surface of the resin sheet (1),
the thermoplastic resin has a deflection temperature under load not lower than 90 °C,
the resin sheet (1) has a thickness of 1 to 40 mm, and
the skin layer (3) has a thickness of 5 to 50 % of the thickness of the resin sheet (1), **characterized in that** the average porosity of the resin sheet (1) gradually decreases going from a center of the core layer (2) as determined along the thickness direction toward a surface of the resin sheet (1).

2. The resin sheet (1) according to claim 1, wherein the first region (A1) has an average porosity of 50 % to 95 %.

3. The resin sheet (1) according to claim 1, wherein the first region (A1) has an average porosity of 65 % to 90 %.

4. The resin sheet (1) according to claim 1, wherein the skin layer (3) is formed from a reinforced resin containing inorganic filler.

5. The resin sheet (1) according to any one of claims 1 to 4, wherein:
the resin sheet (1) has a bend elastic constant not lower than 1.5 GPa and a density not higher than 1.0 g/cm³; and
the skin layer (3) has a bend elastic constant not lower than 1.5 times a bend elastic constant of the core layer (2).

6. The resin sheet (1) according to any one of claims 1 to 4, wherein the resin sheet (1) has a deflection temperature under load not lower than 150 °C, a bend elastic constant not lower than 3 GPa, and a density not higher than 1.3 g/cm³.

7. The resin sheet (1) according to any one of claims 1 to 4, wherein the thermoplastic resin contains at least one selected from the group consisting of polycarbonate, modified polyphenylene ether, syndiotactic polystyrene, polyphenylene sulfide, polysulfone, polyether sulfone, polyarylate, polyamidimide, thermoplastic polyimide, polyether imide, and liquid-crystal polymer.

8. A resin molding produced by thermally shaping the resin sheet (1) according to any one of claims 1 to 4.

## Patentansprüche

1. Harzplatte (1), die aus einem thermoplastischen Harz besteht und Folgendes umfasst:
eine Kernschicht (2), wobei die Kernschicht (2) eine Schaumharzschicht ist, und
eine Hüllschicht (3), die sich in Dickenrichtung gesehen außerhalb der Kernschicht (2) befindet, wobei die Kernschicht (2) und die Hüllschicht (3) eine Kontinuität bilden;
wobei die Kernschicht (2) eine erste Region (A1) und eine zweite Region (A2), die sich zwischen der ersten Region (A1) und der Hüllschicht (3) befindet umfasst,
wobei die zweite Region (A2) eine geringere durchschnittliche Porosität aufweist als die erste Region (A1), wobei die durchschnittliche Porosität unter 50 % beträgt,
wobei die durchschnittliche Porosität der zweiten Region (A2) vom Zentrum der Kernschicht (2) in Dickenrichtung gesehen zu einer Oberfläche der Harzschicht (1) hin abnimmt;
wobei das thermoplastische Harz eine Formbeständigkeitstemperatur unter Last von nicht weniger als 90 °C aufweist;
wobei die Harzplatte (1) eine Dicke von 1 bis 40 mm aufweist und
die Hüllschicht (3) eine Dicke von 5 % bis 50 % der Dicke der Harzplatte (1) aufweist;
**dadurch gekennzeichnet, dass** die durchschnittliche Porosität der Harzplatte (1) vom Zentrum der Kernschicht (2) in Dickenrichtung gesehen zu einer Oberfläche der Harzplatte (1) hin allmählich abnimmt.

2. Harzplatte (1) nach Anspruch 1, wobei die erste Region (A1) eine durchschnittliche Porosität von 50 % bis 95 % aufweist.

3. Harzplatte (1) nach Anspruch 1, wobei die erste Region (A1) eine durchschnittliche Porosität von 65 % bis 90 % aufweist.

4. Harzplatte (1) nach Anspruch 1, wobei die Hüllschicht (3) aus einem verstärkten Harz besteht, das einen anorganischen Füllstoff enthält.

5. Harzplatte (1) nach einem der Ansprüche 1 bis 4, wobei:
die Harzplatte (1) eine Biegeelastizitätskonstante von nicht weniger als 1,5 GPa und eine Dichte von nicht mehr als 1,0 g/cm² aufweist; und
die Hüllschicht (3) eine Biegeelastizitätskonstante von nicht weniger als dem 1,5-Fachen der Biegeelastizitätskonstante der Kernschicht (2) aufweist.

6. Harzplatte (1) nach einem der Ansprüche 1 bis 4, wobei die Harzplatte (1) eine Formbeständigkeitstemperatur unter Last von nicht weniger als 150 °C, eine Biegeelastizitätskonstante von nicht weniger als 3 GPa und eine Dichte von nicht mehr als 1,3 g/cm² aufweist.

7. Harzplatte (1) nach einem der Ansprüche 1 bis 4, wobei das thermoplastische Harz zumindest eines, ausgewählt aus der aus Polycarbonat, modifiziertem Polyphenylenether, syndiotaktischem Polystyrol, Polyphenylensulfid, Polysulfon, Polyethersulfon, Polyarylat, Polyamidimid, thermoplastischem Polyimid, Polyetherimid und einem flüssigkristallinen Polymer bestehenden Gruppe umfasst.

8. Harzformteil, das durch thermisches Formen einer Harzplatte (1) nach einem der Ansprüche 1 bis 4 hergestellt ist.

## Revendications

1. Feuille de résine (1) formée à partir d'une résine thermoplastique, comprenant :
une couche centrale (2), la couche centrale (2) étant une couche de résine de mousse ; et
une couche de peau (3) située à l'extérieur de la couche centrale (2), comme déterminé le long d'une direction d'épaisseur, la couche centrale (2) et la couche de peau (3) formant une continuité,
dans laquelle la couche centrale (2) inclut une première région (A1) et une seconde région (A2) située entre la première région (A1) et la couche de peau (3),
la seconde région (A2) présente une porosité moyenne inférieure à la première région (A1), ladite porosité moyenne étant inférieure à 50 %,
la porosité moyenne de la seconde région (A2) diminue à partir d'un centre de la couche centrale (2), comme déterminé le long de la direction d'épaisseur, vers une surface de la feuille de résine (1),
la résine thermoplastique présente une température de déformation sous charge non inférieure à 90°C,
la feuille de résine (1) présente une épaisseur de 1 à 40 mm, et
la couche de peau (3) présente une épaisseur de 5 à 50 % de l'épaisseur de la feuille de résine (1), **caractérisée en ce que** la porosité moyenne de la feuille de résine (1) diminue graduellement à partir d'un centre de la couche centrale (2), comme déterminé le long de la direction d'épaisseur, vers une surface de la feuille de résine (1).

2. Feuille de résine (1) selon la revendication 1, dans laquelle la première région (A1) présente une porosité moyenne de 50 % à 95 %.

3. Feuille de résine (1) selon la revendication 1, dans laquelle la première région (A1) présente une porosité moyenne de 65 % à 90 %.

4. Feuille de résine (1) selon la revendication 1, dans laquelle la couche de peau (3) est formée à partir d'une résine renforcée contenant une charge inorganique.

5. Feuille de résine (1) selon l'une quelconque des revendications 1 à 4, dans laquelle :
la feuille de résine (1) présente une constante élastique de flexion qui n'est pas inférieure à 1,5 GPa et une densité qui n'est pas supérieure à 1,0 g/cm³ ; et
la couche de peau (3) présente une constante élastique de flexion qui n'est pas inférieure à 1,5 fois une constante élastique de flexion de la couche centrale (2).

6. Feuille de résine (1) selon l'une quelconque des revendications 1 à 4, dans laquelle la feuille de résine (1) présente une température de déformation sous charge qui n'est pas inférieure à 150°C, une constante d'élasticité de flexion qui n'est pas inférieure à 3 GPa, et une densité qui n'est pas supérieure à 1,3 g/cm³.

7. Feuille de résine (1) selon l'une quelconque des revendications 1 à 4, dans laquelle la résine thermoplastique contient au moins un choisi dans le groupe comprenant polycarbonate, éther de polyphénylène modifié, polystyrène syndiotactique, sulfure de polyphénylène, polysulfone, polyéthersulfone, polyarylate, polyamidimide, polyimide thermoplastique, polyétherimide et polymère à cristaux liquides.

8. Moulage en résine produit par mise en forme thermique de la feuille de résine (1) selon l'une quelconque des revendications 1 à 4.
